# DEMANDE DE BREVET EUROPEEN

(11) **EP 2 218 620 A1**
(43) Date de publication de la demande: **18.08.2010**
(21) Numéro de dépôt: 09306122.4
(22) Date de dépôt: 23.11.2009
(51) Int. Cl.: B60T 17/06, B62D 65/02, F16B 17/00

(54) **Système de fixation d'un réservoir de liquide de frein déporté**

(30) Priorité: 16.02.2009 FR 0951001
(71) Demandeur: Renault S.A.S., 92100 Boulogne-Billancourt (FR)
(72) Inventeur: Domas, Regis, 78180, MONTIGNY LE BRETONNEUX (FR); Escalere, Christophe, 92130, ISSY LES MOULINEAUX (FR); Le Roch, Yannick, 78610, SAINT LEGER (FR)

(57) **Abrégé**

Un réservoir (1) de liquide de frein est déporté sur une traverse (2), le réservoir (1) comportant une paroi supérieure (10) sensiblement plane. Pour sa fixation, le réservoir (1) comporte une patte (13) s'étendant perpendiculairement à la paroi supérieure (10), la patte (13) étant maintenue contre la traverse (2) par des moyens de fixation amovibles (7) comportant au moins un trou (130) à travers la patte (13). Chaque trou (130) comporte une douille (131) de renfort emmanchée dans le trou (130).

## Description

L'invention concerne un système de fixation d'un réservoir de liquide de frein déporté.

Un système de freinage d'un véhicule automobile comporte un maître-cylindre qui est actionné par une pédale de frein et qui permet d'envoyer du liquide de frein sous pression vers des freins. Le liquide de frein est contenu dans un réservoir qui est fréquemment fixé directement sur le maître-cylindre.

Dans le document FR 2 874 365, il a été proposé de déporter le réservoir vers un endroit plus accessible et de le relier au maître-cylindre par l'intermédiaire d'un tuyau flexible. Ainsi, le réservoir est plus accessible et il est plus aisé pour un utilisateur du véhicule de contrôler le niveau de liquide contenu dans le réservoir et de le remplir. Le réservoir est alors fixé à un élément de la carrosserie du véhicule, à l'intérieur du compartiment moteur.

Un élément de carrosserie proche de la position du maître cylindre est une traverse située au bas du pare-brise du véhicule. Dans certains modèles de véhicule, cette traverse est prévue amovible afin d'accéder à des équipements lors de l'entretien du véhicule, tel qu'un filtre à air. Cette opération d'entretien peut être fréquente. Si le réservoir déporté est fixé sur cette traverse, il est donc nécessaire de démonter fréquemment ce réservoir et de le déplacer. Or, le démontage fréquent n'est pas prévu dans l'art antérieur : les points de fixation sont d'un accès malaisé, ils sont fragiles et inadaptés à un nombre élevé de démontages.

L'invention vise donc à fournir un système de fixation d'un réservoir déporté qui soit adapté à des démontages fréquents par une facilité d'accès et par une résistance accrue.

Avec ces objectifs en vue, l'invention a pour objet un système de fixation d'un réservoir de liquide de frein déporté sur une traverse, le réservoir comportant une paroi supérieure sensiblement plane. Le réservoir comporte une patte s'étendant perpendiculairement à la paroi supérieure, la patte étant maintenue contre la traverse par des moyens de fixation amovibles comportant au moins un trou à travers la patte. Chaque trou comporte une douille de renfort emmanchée dans le trou.

La patte de fixation étant sur la partie supérieure du réservoir, elle est facilement accessible par le dessus ou le côté du réservoir. De plus, en s'étendant perpendiculairement à la paroi supérieure, elle forme avec celle-ci un ensemble résistant sur l'aspect mécanique. Les moyens de fixations peuvent être des goupilles, mais sont de préférence des vis traversant des trous dans la patte et s'engageant avec une partie filetée sur la traverse.

La matière couramment utilisée pour réaliser le réservoir est une matière synthétique telle que du polyéthylène. Elle n'est pas très tenace. C'est pourquoi une douille de renfort dans le trou permet de reprendre les efforts de serrage du moyen de fixation, d'éviter l'usure et l'écrasement de la paroi du trou et augmenter ainsi le nombre de montages et démontages que peut supporter sans dommage le réservoir déporté. La douille est par exemple un tube métallique, plus particulièrement en acier. Elle pourrait aussi être en une matière synthétique plus tenace que celle du réservoir.

De manière particulière, la douille comporte au moins un épaulement. Elle présente ainsi une plus grande surface pour prendre l'appui du moyen de fixation ou de la traverse.

Selon un perfectionnement, le système de fixation comporte au moins un système de prépositionnement pour guider la patte par rapport à la traverse avant la mise en place des moyens de fixation. La position du réservoir est ainsi facilement retrouvée au remontage. Le remontage du réservoir en est facilité, ce qui permet d'accélérer l'opération.

Plus particulièrement, le système de prépositionnement comporte un pion fixé sur la traverse faisant saillie dans un trou de positionnement de la patte. En engageant le trou de la patte sur le pion, on permet à la patte de retrouver sa place selon au moins deux directions. Avec un pion supplémentaire, on place la patte selon une troisième direction supplémentaire, ce qui, avec l'appui plan contre la traverse, permet de positionner complètement la patte, et donc le réservoir sur la traverse. Lors du remontage, on remet en position très rapidement le réservoir avant de mettre en place les moyens de fixation.

Selon une caractéristique particulière, la patte est située sensiblement au milieu de la face supérieure. Le renfort réalisé par la patte est ainsi placé à un endroit où il profite au mieux à toutes les parties du réservoir. De plus, le réservoir suspendu à la patte est équilibré et n'a pas tendance à basculer par l'avant ou par l'arrière. En outre, une partie du réservoir est sous la traverse tandis que seule la partie du réservoir qui doit être accessible et visible fait saillie par rapport à la face de la traverse sur laquelle la patte est fixée. Ceci permet une position plus reculée.

Selon une autre disposition, le système de fixation comporte un câble électrique connecté au réservoir, la traverse comportant des supports pour maintenir le câble, le câble étant inséré dans chaque support de manière amovible. En libérant le câble des supports, on donne au réservoir une plus grande mobilité sans qu'il soit nécessaire de déconnecter le câble du réservoir. Ainsi, pendant les opérations de maintenance, le réservoir peut être posé dans le compartiment moteur sans qu'il soit nécessaire de le déconnecter. Le câble est ensuite remis en place sur les supports.

L'invention sera mieux comprise et d'autres particularités et avantages apparaîtront à la lecture de la description qui va suivre, la description faisant référence aux dessins annexés parmi lesquels :
- la figure 1 est une vue en perspective d'un système conforme à l'invention dans un compartiment moteur ;
- la figure 2 est une vue de côté du système de la figure 1 ;
- la figure 3 est une vue similaire à la figure 1, le réservoir étant posé dans le compartiment moteur ;
- la figure 4 est une vue en perspective du réservoir selon l'invention ;
- la figure 5 est une vue en coupe selon la ligne V-V de la figure 2.

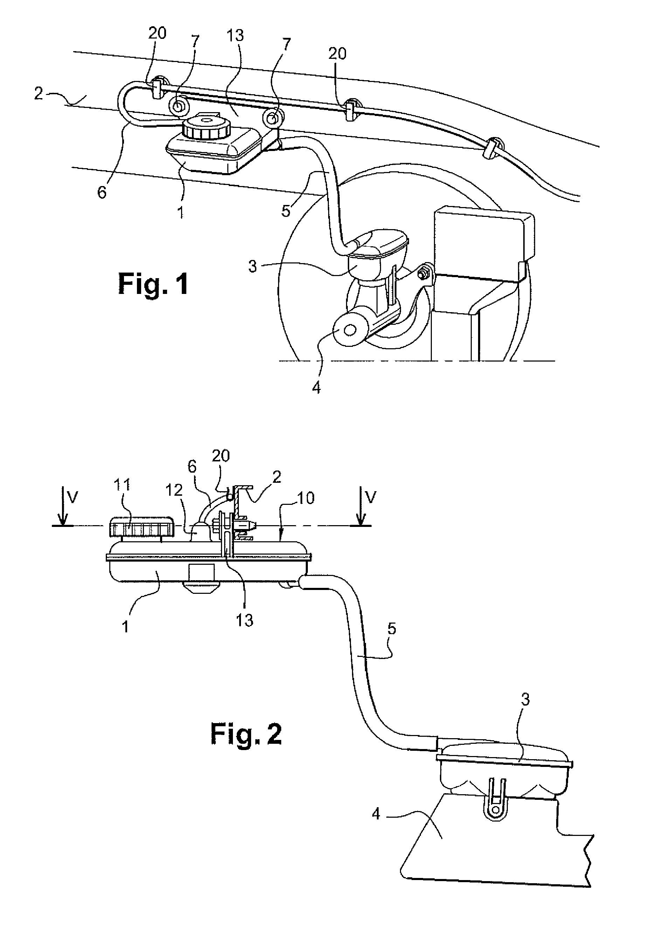

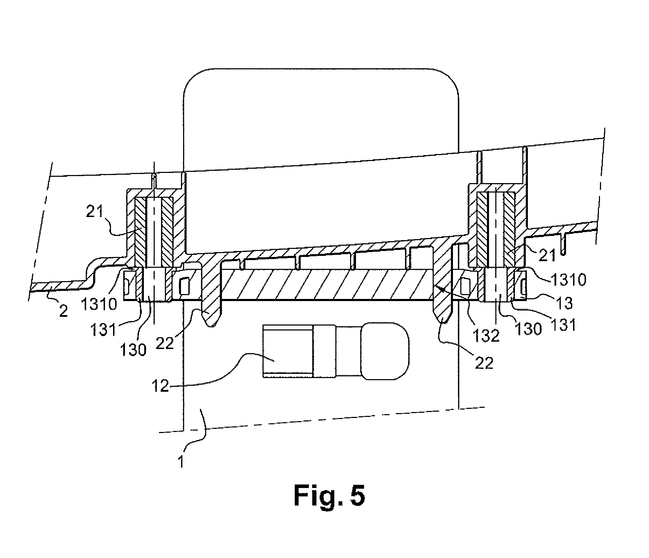

Un système de fixation d'un réservoir 1 de liquide de frein déporté est montré sur les figures 1 à 5. Le réservoir 1 déporté fait partie d'un système de freinage pour un véhicule. Le système de freinage comporte un maître-cylindre 4 sur lequel est fixé un connecteur hydraulique 3. Le réservoir 1 est relié au connecteur hydraulique 3 par une conduite 5 souple et est placé au-dessus du connecteur hydraulique 3 de manière à l'alimenter en liquide de frein par gravité.

Le compartiment moteur du véhicule comporte une traverse 2 amovible, appelée également « boîte à eau », qui s'étend transversalement au véhicule au-dessus du maître-cylindre 4. Le réservoir 1 est fixé de manière amovible sur la traverse 2.

Le réservoir 1 a une forme générale de pavé assez plat. Il est creux et comporte une paroi supérieure 10 sensiblement plane. La paroi supérieure 10 est munie d'un bouchon 11 amovible afin de permettre le remplissage du réservoir 1 en liquide de frein. La paroi supérieure 10 comporte également un connecteur électrique 12 auquel est relié un câble 6 électrique afin de délivrer une information sur le niveau de remplissage du réservoir 1. La traverse 2 comporte des supports 20 pour maintenir le câble 6, le câble 6 étant inséré dans chaque support 20 de manière amovible. Les supports 20 exercent un léger serrage sur le câble 6 afin d'immobiliser celui-ci.

Le réservoir 1 comporte une patte 13 s'étendant perpendiculairement à la paroi supérieure 10 sensiblement au milieu de la paroi supérieure 10. La patte 13 vient en appui contre une face sensiblement verticale de la traverse 2. La patte 13 est maintenue contre la traverse 2 par des moyens de fixation amovibles. Les moyens de fixation amovibles comportent au moins un trou 130, de préférence deux trous 130, dans la patte 13 traversés par deux vis 7, et deux écrous 21 recevant les vis 7 et maintenus sur la traverse 2. Une douille 131 de renfort est emmanchée dans chaque trou 130 de telle manière que la tête des vis 7 s'appuie sur la douille 131. La douille 131 comporte un épaulement 1310 à l'interface avec la traverse 2. Ainsi, la douille 131 présente une large surface d'appui avec la traverse 2.

Des systèmes de prépositionnement, de préférence deux, sont prévus pour guider la patte 13 par rapport à la traverse 2. Chaque système de prépositionnement comporte un pion 22 fixé sur la traverse 2 et faisant saillie de la face verticale, et un trou de positionnement 132 dans la patte 13 entre les moyens de fixation.

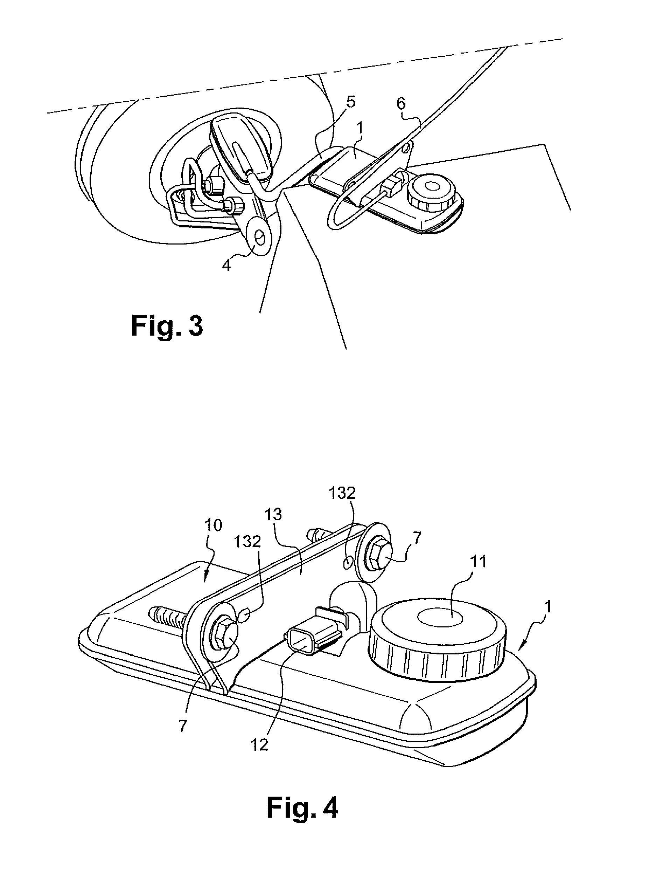

Pour le démontage du réservoir 1, l'opérateur retire les vis 7 et dégage la patte 13 des pions 22 de prépositionnement. Il dégage également le câble 6 hors des supports 20 par une simple traction. Puis il pose le réservoir 1 en faisant fléchir la conduite 5 et le câble 6 sur un équipement contenu dans le compartiment moteur. La traverse 2 est alors libérée et peut être déposée, comme montré sur la figure 3.

Pour le remontage, quand la traverse 2 a été remise en place, l'opérateur approche le réservoir 1 de sa position, il insère le câble 6 sur les supports 20, puis il engage les trous de prépositionnement 132 sur les pions 22 de la traverse 2. Puis il remet et serre les vis 7.

## Revendications

1. Système de fixation d'un réservoir (1) de liquide de frein déporté sur une traverse (2), le réservoir (1) comportant une paroi supérieure (10) sensiblement plane et une patte (13) s'étendant perpendiculairement à la paroi supérieure (10), la patte (13) étant maintenue contre la traverse (2) par des moyens de fixation amovibles (7), **caractérisé en ce que** les moyens de fixation amovibles (7) comportent au moins un trou (130) à travers la patte (13), chaque trou (130) comportant une douille (131) de renfort emmanchée dans le trou (130).

2. Système selon la revendication 1,
**caractérisé en ce qu'**il comporte au moins un système de prépositionnement pour guider la patte (13) par rapport à la traverse (2) avant la mise en place des moyens de fixation.

3. Système selon la revendication 2, dans lequel le système de prépositionnement comporte un pion (22) fixé sur la traverse (2) faisant saillie dans un trou de positionnement (132) de la patte (13).

4. Système selon l'une quelconque des revendications 1 à 3, dans lequel la douille (131) comporte au moins un épaulement (1310).

5. Système selon l'une quelconque des revendications 1 à 4, dans lequel la patte (13) est située sensiblement au milieu de la paroi supérieure (10).

6. Système selon l'une quelconque des revendications 1 à 5, **caractérisé en ce qu'**il comporte un câble (6) électrique connecté au réservoir (1), la traverse (2) comportant des supports (20) pour maintenir le câble (6), le câble (6) étant inséré dans chaque support de manière amovible.
